# EUROPEAN PATENT SPECIFICATION

(11) **EP 4 164 368 B1**
(45) Date of publication and mention of the grant of the patent: **12.03.2025**
(21) Application number: 21752673.0
(22) Date of filing: 30.07.2021
(51) Int. Cl.: A01F 15/14

(54) **BALER AND METHOD OF BINDING A BALE**
BALLENPRESSE UND VERFAHREN ZUM BINDEN EINES BALLENS
PRESSE À BALLES ET PROCÉDÉ DE NOUAGE D'UNE BALE

(30) Priority: 30.07.2020 GB 202011846
(43) Date of publication of application: 19.04.2023
(60) Divisional application: 24173006.8
(73) Proprietor: Kuhn-Geldrop B.V., 5667 KP Geldrop (NL)
(72) Inventor: VAESSEN, Sjir, Hendrik, Margo, 5652 RG Eindhoven (NL); AKKERMANS, Dionisius, Cornelis, Maria, 4707 PE Roosendaal (NL)
(74) Representative: Murgitroyd & Company
(86) International application number: PCT/EP2021/071401
(87) International publication number: WO 2022/023530

(56) References cited:
- US-A1- 2014 103 647
- US-A1- 2020 084 972
- US-A1- 2020 137 960
- US-B2- 9 883 633

## Description

The present invention relates to a baler and a method of binding a bale. The invention also relates to a baler comprising a bale forming channel, a reciprocating plunger and a binding system for binding a bale in the bale forming channel.

It is known to provide a baler for pressing bales with a reciprocal plunger, whereby the bale is bound by tying a plurality of twine loops around the bale.

The twine for binding the bale is supplied by two supplies per twine loop, one for the top side and one for bottom side of the bale. The closing of the loop around the finished bale is done by tying two knots. The basic principle of such a bale binding system is well described in US4074623 and EP2861055. The binding system described in US4074623 uses only one bill hook per twine loop, which produces the two knots sequentially. The binding system described in EP2861055 uses two bill hooks per twine loop that produce one knot per bill hook per cycle and produce the knots simultaneously. The first system described in US4074623 is more compact and less complicated than the second described in EP2861055.

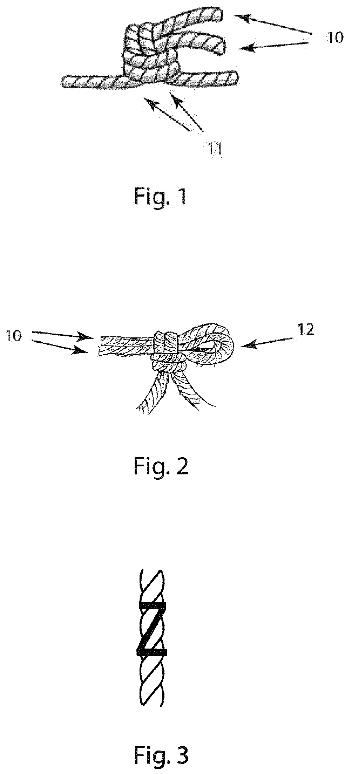

It is known from prior art that the knots can be of a conventional type or a loop type, as depicted in Figs. 1 & 2. In a conventional knot as depicted in Fig. 1 the cut ends 10 of the twines extend outwards from the knot. In a loop knot as depicted in Fig. 2 the cut ends 10 of the twines are turned back on themselves and caught by the turns of the knot, forming short twine loops 12 on top of the knot. US4074623 is an example of a binding system as described above in which the twines are tied with a conventional knot. EP2861055 is an example of a binding system as described above in which the twines are tied with a loop knot. Conventional knots as well as loop knots are also known from binding systems where there is only one twine supply per (bale binding) loop, and the binding loop is closed by one knot. Binding systems with one twine supply/knot are less favourable because passing the single twine around the bale puts a lot of tension on the twine while baling and during knotting of the twine, which can break the twine or deform the knot.

The binding of the bale is necessary to hold the bale under compression; the expansion of the bale as it is ejected from the baling channel puts a lot of tension on the binding twine. The breaking resistance of the binding twine and the knot(s) in the twine determine the maximum possible compression of the material in the bale. A high compression is desirable as the higher the compression the more efficiently the bale material can be stored and transported.

It is known that the breaking force for breaking the twine in or near the knot is less than the breaking force of the twine away from the knot, so if the expanding material of the bale puts too much tension on the binding loop the twine is likely to break in or directly adjacent to the knot, for example at the locations 11 indicated in Fig. 1. This because the twine in and directly adjacent the knot is bent over a small radius and the fibers in the outer part of the bend are subjected to a greater strain and are likely to break first. When the outer fibers break the rest of fibers will also then break.

Further it is known that the binding twine is twisted and in practice it is always twisted in the same direction, called a Z-twist, as illustrated in Fig. 3.

A knot can be made "right-handed" or "left-handed" depending on the turning direction of the bill hook. In US4074623 both knots are tied as right-hand knots (the bill hook is turned clockwise when seen from the drive side, and the twine loop from the finished bale is laid from the left over the bill hook). In EP2861055 a right-hand knot and a left-hand knot are formed; the lower bill hook that closes the loop on the finished bale turns clockwise (seen from the drive side) to make a right-hand knot and the other bill hook turns counterclockwise to make a left-hand knot.

It has been noticed that with currently available binding twine left hand knots have a lower breaking resistance than right hand knots. This is due to the interaction between the bends of the twine within the knot and the twist of the twine. With left hand knots the outer fibers are over-stretched at a lower tension/force. When the outer fibers break the rest of fibers will also break. With right hand knots the tension is spread more evenly between the fibres, giving the twine loop a higher breaking force.

Further, it is noticed that loop knots tend to break at a higher force than conventional knots. The twine ends that form the loops are doubled in the turn of the knot, and as a result the bend in the twine has a larger radius. Therefore, there is less strain on the outer fibers in the turns of the twine within the knot. The tension in the fibers in the outer part of the twine is thus reduced in comparison with the conventional knot. Therefore, the loop knot will have a substantially higher twine load breaking strength.

A problem with existing double-knot binding systems is that the binding twines tend to break adjacent the knots at a force that is significantly lower than the ultimate breaking strength of the binding twine.

EP2721920 describes a knotter system for a baler in which the forces are regulated in the twine holder during formation of the first knot. The twine holder is partially released during formation of the knot, allowing the twine strands to pull through the twine holder so that these strands are not under high tension. When the knife engages the strands the strands bend and pull extra twine through the twine holder. The twine holder is then tightened again so that the knife cuts the twine. As a result, the knotter is able to form either a loop knot in which both ends of the twine are caught in the knot, or a half loop knot in which only one of the twine ends is longer and forms a loop.

A disadvantage of the system descripted in EP2721920 is that the amount of twine pulled through the twine holder depends on numerous variables such as the sharpness of the knife, the physical properties of the twine (for example, its slipperiness) and the thickness of the twine. Furthermore, timing of the steps of the operation is critical and the mechanism to regulate the holding force is complicated. These factors all affect the reliability of the system.

It is an object of the present invention to provide a solution to one or more of the problems set out above, thereby allowing the compression of the bale to be increased without causing the twine loops to break and/or avoiding or mitigating one or more of the disadvantages of the system descripted in EP2721920.

Other known systems are disclosed in US2020/137960, US2014/103647, US2020/084972 and US9883633. US2020/137960 discloses a knotter system that is capable of producing first and second loop knots. The solution disclosed is to adapt the drive system to cause the bill hook to perform an additional movement. The drive system includes a recess and an obstacle arranged to move a pinion into a recess. The recess and obstacle are arranged to rotate the pinion over a determined angle and back in order to move an upper lip of the billhook away from a lower lip and back after at least one of a first full rotation and a second full rotation. By rotating the pinion over a determined angle and back in order to move the upper lip of the billhook away from the lower lip and back after the first full rotation and/or after the second full rotation the forming of a first and second loop knot can be achieved.

According to one aspect there is provided a baler according to claim 1.

Optionally, the twine holder comprises a rotary disk with a plurality of clamping notches, a retainer adjacent a periphery of the rotary disk, and a drive for rotating the rotary disk to clamp twines in at least one of the clamping notches against the retainer, and wherein the clamping notches are arranged asymmetrically around the periphery of the rotary disk.

Optionally, the twine holder comprises a rotary disk with a plurality of clamping notches, a retainer adjacent a periphery of the rotary disk, and a drive for rotating the rotary disk to clamp a twine in at least one of the clamping notches against the retainer, wherein the retainer is configured so that the twine can be guided across the retainer in two different positions depending on the rotational position of the rotary disk, comprising a first position in which the twine can be cut by the twine cutter and a second position in which the twine cannot be cut by the twine cutter.

Optionally, the bill hook is rotatable between a first position in which the bill hook engages the twines and a second position in which a knot formed by the knotter is stripped from the bill hook by the stripper element, wherein the bill hook includes a catching element that is configurable in a closed configuration to retain a twine to the bill hook and in an open configuration to release the twine from the bill hook, wherein the catching element is configured to adopt the open configuration to release a retained twine from the bill hook after a knot formed by the knotter is removed from the bill hook by the stripper element, so that the cut end of the twine is not pulled through the knot, and wherein the catching element is biased by a resilient biasing element towards the closed configuration and is moved to the open configuration by an opening element that acts against the resilient biasing element, without rotating the bill hook beyond the second position.

The first knot and the second knot are both loop knots.

The twine cutter is configured to cut the twine to provide a cut end, and wherein the twine cutter is displaced from the bill hook to provide a length L of twine between the cut end and the rotational axis of the bill hook, wherein the length L fulfils the following definition: L is at least 1.3 times the length of the bill hook from the rotational axis to the tip of the bill hook.

Optionally, the length L fulfils one or more of the following definitions:
- L is at least 1.6 times, or at least 2.0 times the length of the bill hook from the rotational axis to the tip of the bill hook;
- L is at least 0.5 times, or at least 0.6 times, or at least 0.75 times the length of twine needed to wrap circumferentially around the bill hook:
- L is at least 9 times, or at least 11 times, or at least 14 times the diameter of the twine when tied around a bound bale;
- L is at least 34mm, or at least 41mm, or about 52mm.

Optionally, the binding system further comprises a twine guide located between the twine holder and the bill hook.

Optionally, the twine cutter is located between the twine guide and the twine holder.

According to another aspect there is provided a method according to claim 9.

Optionally, the twine holder comprises a rotary disk with a plurality of clamping notches arranged asymmetrically around a periphery of the rotary disk, and a retainer adjacent the periphery of the rotary disk, the method comprising driving rotation the rotary disk to clamp twines in at least one of the clamping notches against the retainer.

Optionally, the twine holder comprises a rotary disk with a plurality of clamping notches, a retainer adjacent a periphery of the rotary disk, and a drive for rotating the rotary disk to clamp a twine in at least one of the clamping notches against the retainer, the method comprising guiding the twine across the retainer in two different positions by adjusting the rotational position of the rotary disk, said positions comprising a first position in which the twine can be cut by the twine cutter and a second position in which the twine cannot be cut by the twine cutter.

Optionally, the method further comprises rotating the bill hook between a first position in which the bill hook engages the twines and a second position in which a knot is stripped from the bill hook by the stripper element, resiliently biasing the catching element towards a closed configuration to retain a twine on the bill hook while a knot is formed, and moving the catching element to an open configuration by operation of an opening element that acts against the resilient biasing element, without rotating the bill hook beyond the second position, to release the retained twine after the knot has been removed from the bill hook, so that the cut end of the twine is not pulled through the knot.

The first knot and the second knot are both tied as loop knots.

The method comprises cutting the twine to provide a length L of twine between a cut end of the twine and the rotational axis of the bill hook, wherein the length L fulfils the following definition: L is at least 1.3 times the length of the bill hook from the rotational axis to the tip of the bill hook.

Optionally, the length L fulfils one or more of the following definitions:
- L is at least 1.6 times, or at least 2.0 times the length of the bill hook from the rotational axis to the tip of the bill hook
- L is at least 0.5 times, or at least 0.6 times, or at least 0.75 times the length of twine needed to wrap circumferentially around the bill hook:
- L is at least 9 times, or at least 11 times, or at least 14 times the diameter of the twine when tied around a bound bale;
- L is at least 34mm, or at least 41mm, or about 52mm.

Various embodiments of the invention will now be described by way of example with reference to the accompanying drawings, in which:
Figures 1 & 2 illustrate respectively a conventional type knot and a loop type knot;
Figure 3 illustrates a binding twine with a conventional twist pattern, called a Z-twist;
Figure 4 is a partially sectional side view of part of a baler;
Figure 5 depicts a twine loop tied around a finished bale and a pair of twines looped around a partially completed bale;
Figure 6 is an isometric view of a knotter from a first angle;
Figure 7 is an isometric view of the knotter from a second angle;
Figure 8 is an isometric view of the knotter from a third angle;
Figure 9 is a side view of a bill hook;
Figures 10a, 10b, 10C and 10D are isometric views of the bill hook in different operational conditions;
Figure 11 is a plan view of a twine disk;
Figure 12 is a side elevation of the knotter illustrating axial movement of the work wheel;
Figure 13 is an isometric view of the bill hook in different operational conditions;
Figure 14 is an isometric view of the knotter illustrating a length value L;
Figure 15 is an isometric view of an alternative knotter, and
Figures 16 and 17 are isometric views of another alternative knotter in different operational conditions.

A binding system for baler and a method for binding a crop bale are described in EP-1584227-A1.

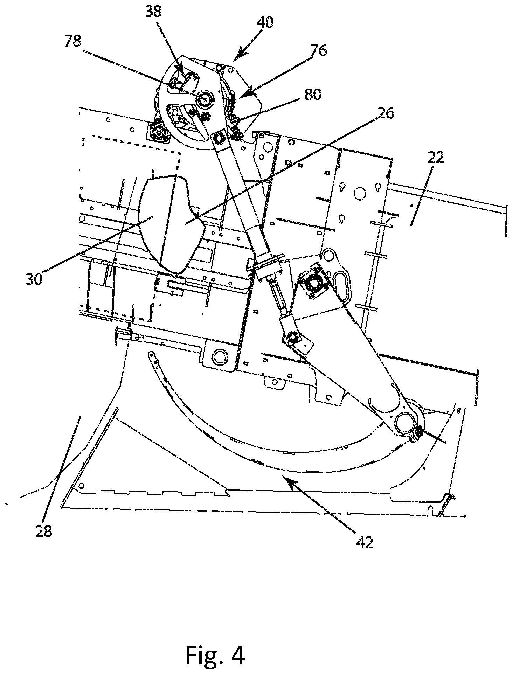

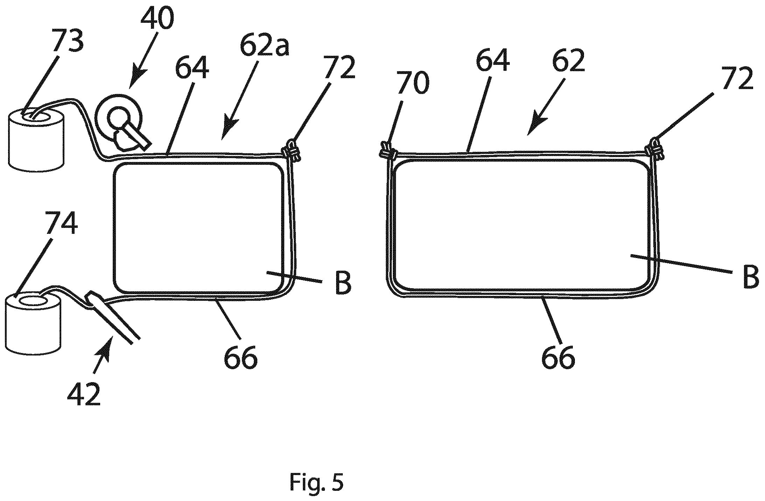

The baler shown in figure 4 is similar in many respects to the baler described in EP-1584227-A1 and includes a bale case 22 that defines a bale chamber 26. Bale material is introduced into the bale chamber 26 through a feed duct 28. A plunger 30 compresses bale material in the bale chamber to produce a bale B. As the bale is produced, two twines 64,66 are drawn from twine sources 73,74 and laid along the upper and lower sides of the bale, as shown in figure 5. Upon completion of the bale, the twines 64, 66 are brought together by a needle 42 and the two twines 64,66 are tied together by a knotter 40, which is driven via a clutch 38, to form a twine loop 62 that is stretched around the bale B to maintain the bale material in compression after the bale is ejected from the bale case 22.

In this example, the knotter 40 includes a rotary bill hook 82, which is configured to tie two knots successively during each complete operating cycle. As illustrated in figure 5, a first knot 70 is tied to complete the twine loop 62 around the completed bale B and a second knot 72 is then tied to start a new twine loop 62a for the next bale. The twines are severed between the two knots 70, 72. In this example, the first and second knots 70,72 are both right-handed knots and they are tied successively by the same bill hook. Also, in this example, the second knot 72 is a loop knot, whereas the first knot 70 is a conventional knot. The strength of the twine loop is therefore limited by the strength of the conventional first knot 70, which has a lower breaking strength than the loop knot that forms the second knot 72. Alternatively, in certain embodiments of the invention, the first knot 70 and the second knot 72 may both be loop knots.

The binding system and the method for binding a bale according to the present invention are similar in most respects to the binding system and the method for binding a bale described in EP-1584227-A1. However, in certain embodiments of the present invention, the first knot and the second knot are both loop knots. Optionally, the first knot and the second knot are also both right-handed knots and optionally they are tied successively by the same bill hook. In these embodiments the inherent weakness of a conventional knot is avoided, providing a twine loop that has a greater breaking strength. This is turn means that the bale material can more highly compressed, leading to storage and transportation efficiencies, while the risk of the twine loop bursting is reduced. In certain other embodiments, the second knot 72 is a loop knot and the first knot 70 is a conventional knot.

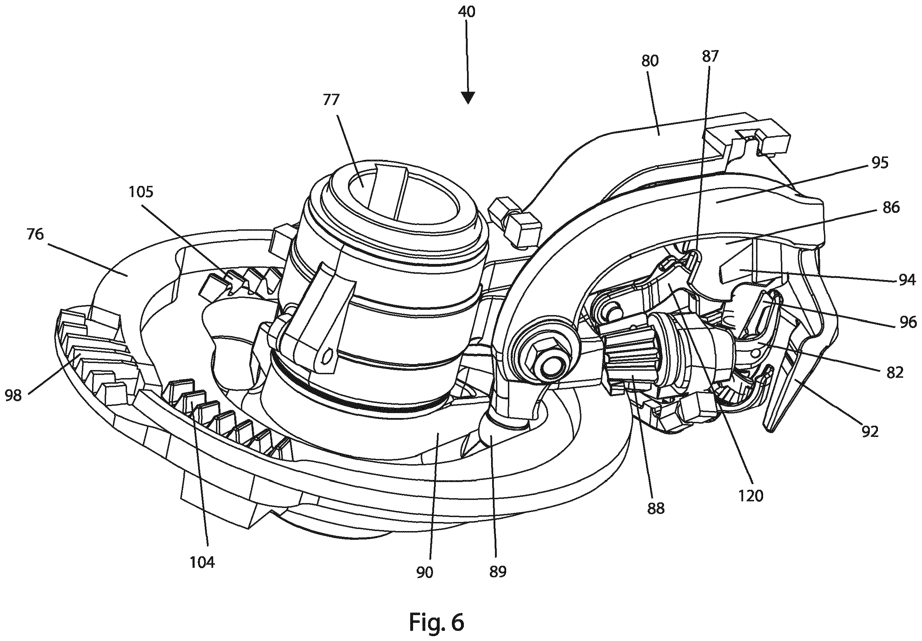

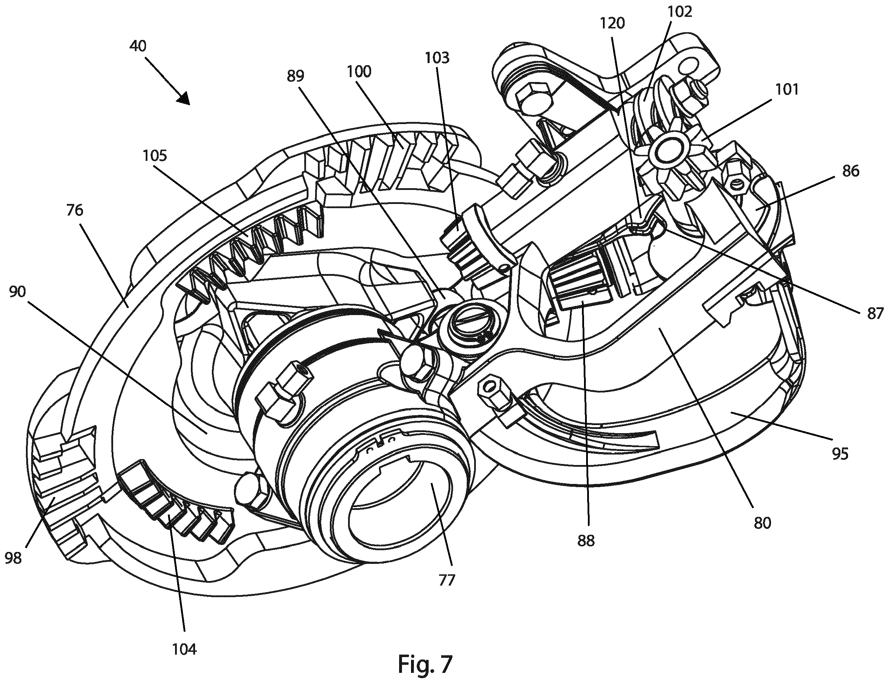

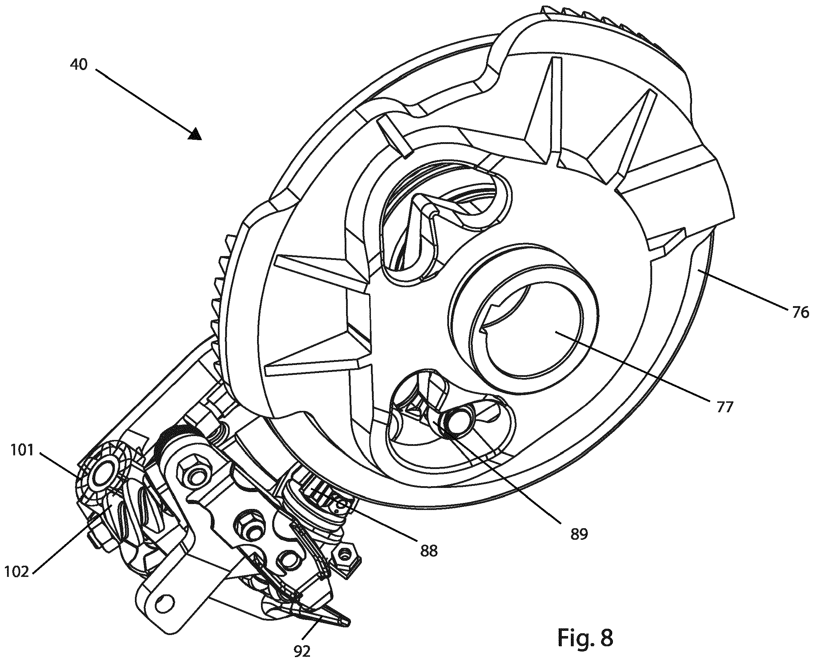

A knotter 40 according to an embodiment of the present invention is shown in more detail in figures 6 to 8. The knotter 40 is similar in many respects to the knotter described in EP-1584227-A1 and therefore will not be described in full detail.

The knotter 40 comprises a circular drive disk 76 that is attached through a hub 77 to a drive shaft 78. The knotter 40 also comprises a frame 80, a rotary bill hook 82 mounted on an end of a shaft 82a for rotation about an axis 84, and a multi-disk twine holder 86 that has a plurality of notches 87 in its perimeter for holding the twines against a retainer 120. A release arm 95 is pivotable to release the twines from the twine holder 86. The release arm 95 carries a cutter 94 for severing the twine strands and a stripper arm 92 for stripping a knot from the bill hook 82. Pivoting movement of the release arm 95 is controlled by a cam follower 89 that engages a cam track 90 in the drive disk 76.

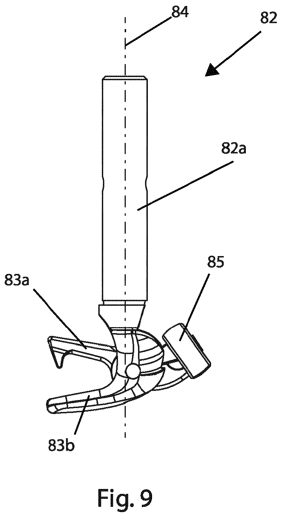

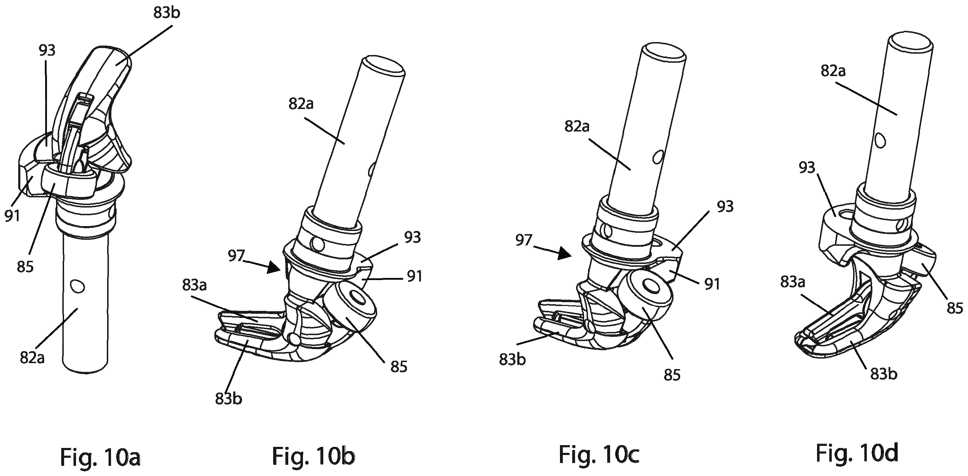

The rotary bill hook 82, which is shown in more detail in figures 9 and 10a-10d, includes a fixed lower lip 83b and a pivotable upper lip 83a that moves between open and closed configurations and is controlled by a cam follower 85, which engages a cam track 91 provided on a collar 93 that surrounds the bill hook shaft 82a. Rotation of the bill hook 82 about the axis 84 is driven by a pinion 88 that engages first and second gear stretches 98,100 on the drive disk 76. The disks of the twine holder 86 are driven by a worm gear 101, a worm screw 102 and a bevel gear 103 that engages third and fourth gear stretches 104, 105 on the drive disk 76. Operation of the knotter 40 is substantially as described in EP-1584227-A1, except as described below.

In one embodiment of the invention, the knotter 40 is modified to provide an increased length L of twine between the bill hook 82 and the cut end of the twine in order to create two loop knots, so that the first knot 70 and the second knot 72 are both loop knots. This is achieved by placing the cutter 94 further from the bill hook 82, as described below. The twine holder 86 is also preferably located further away from the bill hook 82, so that it can hold the cut ends of the twines after the first knot 70 has been tied and the twines have been cut. Because the twines are severed further from the bill hook 82 and close to the twine holder 86, this ensures that there is an increased length of twine L between the bill hook and the cut end of the twine.

In one embodiment of the invention the twine cutter 94 is configured to cut the twine to provide a cut end, and wherein the twine cutter is displaced from the bill hook to provide a length L of twine between the cut end and the bill hook.

The length L is at least 1.3 times the length of the bill hook from the rotational axis to the tip of the bill hook.

Optionally, the length L is at least at least 1.6 times, or at least 2.0 times the length of the bill hook from the rotational axis to the tip of the bill hook.

Optionally, the length L is at least 0.5 times, or at least 0.6 times, or at least 0.75 times the length of twine needed to wrap circumferentially around the bill hook.

Optionally, the length L is at least 9 times, or at least 11 times, or at least 14 times the diameter of the twine when tied around a bound bale.

Optionally, the length L is at least 34mm, or at least 41mm, or about 52mm.

In one embodiment, the invention provides a baler with a reciprocal plunger, a method and system that combines the advantages of binding a bale from two supplies per binding loop and binding the bale with two knots per binding loop whereby the knots are:
- of a loop type and
- are produced sequentially in one knotting cycle by one bill hook.

Preferably, the knots are both right-handed.

The key to forming a loop knot with a knotter 40 of the type described above is to have sufficient length of twine between the bill hook 82 and the position where the twine ends are severed from the twines held by the twine holder. Because the twine ends are severed near to the twine holder, the twine holder must also be placed substantially further from the bill hook.

The twine strands that form the loop of the loop knot are preferably released from the bill hook after the knot has been pulled off the bill hook. In one embodiment this is achieved by actively or passively releasing/opening a catching element 96 (also called a tongue or an upper lip 83a) that retains the twine on the bill hook 82 until just after the moment the knot is pushed/pulled off the bill hook by the stripper element 92. This prevents the risk that the loop will be stuck between the catching element 96 and the base of the bill hook 82, or that the ends of the twine will be pulled completely through the knot so that a conventional knot will be formed.

In one embodiment of the invention illustrated in figures 10A to 10D, the catching element 96 comprises the upper lip 83a of the bill hook 82, which is biased by a resilient biasing element 108 towards the closed configuration. The catching element 96 can be moved actively or passively to the open configuration.

In the system illustrated in figures 10A to 10D the catching element 96 comprises the upper lip 83a, which is moved actively to the open configuration. Opening of the catching element 96 is driven by an opening element 97 that acts against the resilient biasing element. In one embodiment, the opening element 97 comprises the cam track 91 that is provided on the collar 93.

In a conventional knotter the collar 93 is fixed to the frame 80 of the knotter. As the bill hook 82 rotates relative to the collar 93 the cam follower 85 runs along the cam track 91 and the catching element 96 opens when the cam follower encounters a part 91a of the cam track 91 that projects radially outwards from the collar.

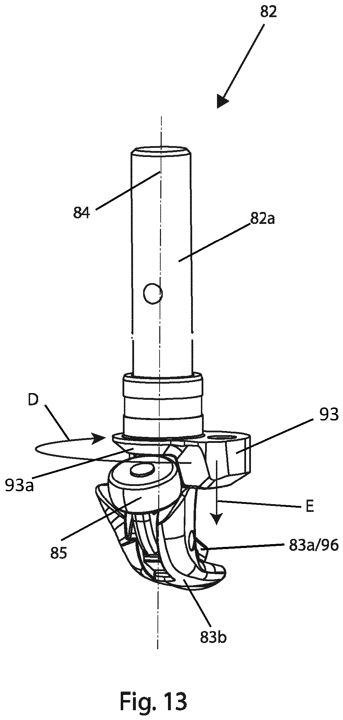

In an embodiment of the invention illustrated in figures 10a-10D and 13, the collar 93 is modified so as to be rotatable relative to the frame 80, as indicated in figure 13 by a curved arrow D. An actuator (not shown) may be provided to control rotary movement of the collar 93, or rotation may be driven mechanically from the drive disk 76. By rotating the collar 93 the catching element 96 (upper lip 83a) can be opened without rotation of the bill hook 82 relative to the frame 80.

The bill hook 82 is rotatable between a first position in which the bill hook engages the twines and a second position in which a knot formed by the knotter is stripped from the bill hook 82 by the stripper arm 92. The catching element 96 can be configured in a closed configuration to retain a twine to the bill hook 82 or an open configuration to release the twine from the bill hook 82. The catching element 96 is configured to adopt the open configuration to release the retained twine from the bill hook 82 after the knot is removed from the bill hook 82 by the stripper arm 92, so that the cut end of the twine is not pulled through the knot. In this embodiment the catching element 96 is biased by the resilient biasing element 108 towards the closed configuration and is moved to the open configuration by the opening element 97, which comprises the collar 93 and the cam follower 85. The catching element 96 can thus be opened to release the twine without rotating the bill hook 82 beyond the second position.

In another embodiment of the invention, also illustrated in figure 13, the collar 93 is modified so that it can move relative to the frame 80 in a linear direction, parallel to the axis 84 of the bill hook 82, as indicated by a straight arrow E. An actuator (not shown) may be provided to control linear movement of the collar 93, or linear movement of the collar 93 may be driven mechanically from the drive disk 76. For example, an actuator (not shown) connected to the collar 93 can be activated to push the collar 93 downwards so that a bevelled portion 93a of the collar engages the cam follower 85 at the rear end of the upper lip 83a, causing the catching element 96 to open. The catching element 96 can therefore be opened either with or without rotation of the bill hook 82 relative to the frame 80. If an actuator is used, the actuator can comprise a linear actuator, for example an electric or hydraulic actuator, or it can be driven mechanically on basis of the rotation of the disk 76.

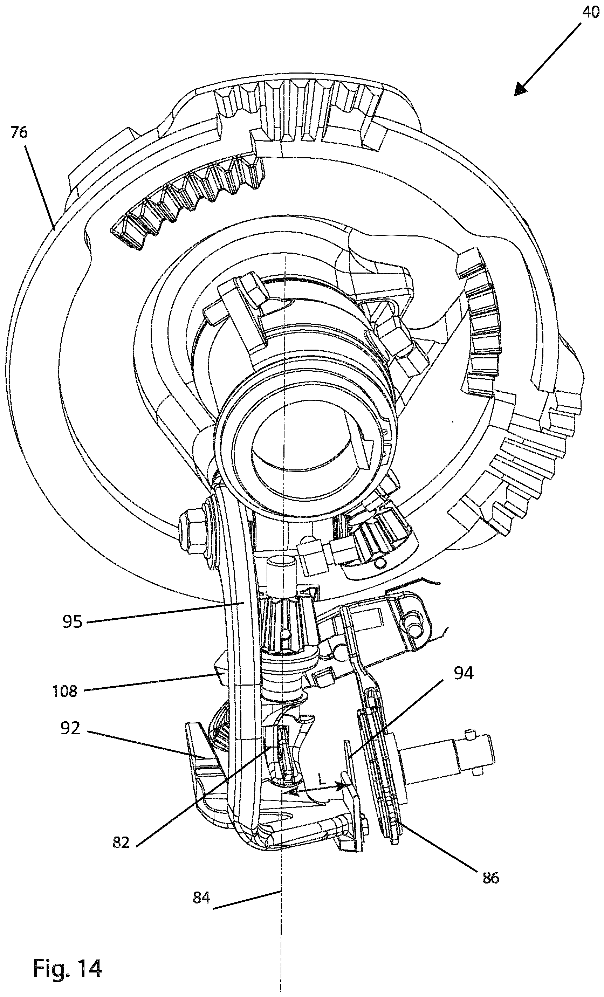

In each of the above embodiments opening of the catching element 96 can be controlled to release the twines from the bill hook after the knot has been formed, to increase the length L of twine between the bill hook and the cut ends of the twines. As illustrated in figure 14, the length L of twine between the bill hook and the cut ends of the twines can be equal to the distance between the axis 84 of the bill hook 82 and the position of the cutter 94 when it cuts the twines.

Alternatively, the catching element can be moved passively to the open configuration. For example, opening of the catching element can be achieved by inactivating the resilient biasing element or reducing/counteracting the biasing force, so that the catching element is moved to the open configuration by the tension in the twine. Inactivating the resilient biasing element or reducing/counteracting the biasing force can be achieved for example by modifying the configuring the resilient element 108 so that only at the position of the bill hook 82 where the knot is stripped off (and not if it is turned to form the knot) the catching element 83a is not affected by the resilient biassing element 108 and the catching element 83a is free to move (partly) upward. When the knot is formed and not yet stripped off the bill hook 82 the twine that is wound around the bill hook 82 will hold the catching element 83a down. As soon as the knot is stripped off the bill hook 82 the catching element 83a is then free to move upward. The upward movement of the catching element 83a may result as a reaction to the pulling force of the twine loop but could also be assisted by an additional counter-biasing resilient element.

If the bill hook 82 is turned for forming the loop the resilient biassing element 108 will force the catching element down.

The process of producing the knot is well described in text and pictures of WO2018202588A1.

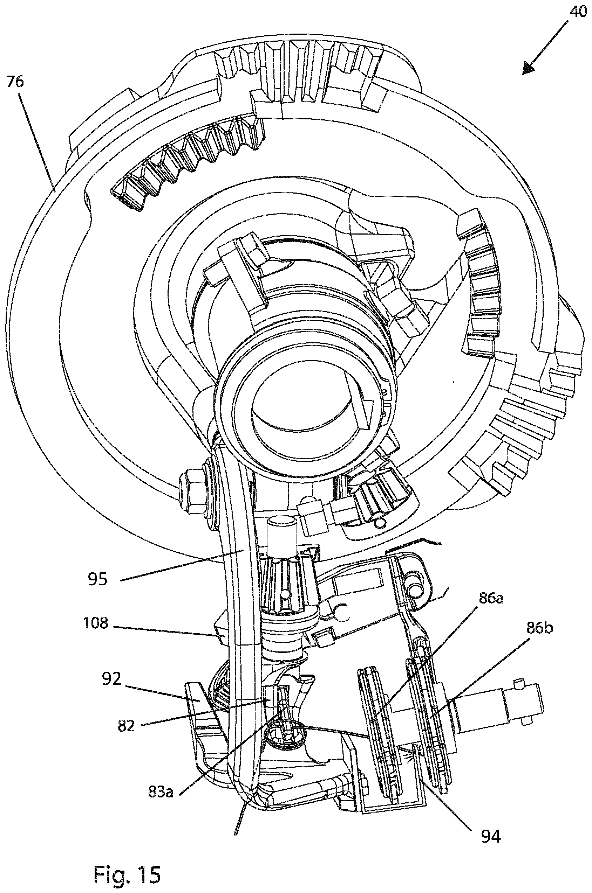

Conventionally, the twine holder 86 is mounted next to the bill hook 82. In another embodiment of the invention illustrated in figure 15 the severing knife 94 and twine holder 86 are placed further away from the bill hook 82, i.e., significantly further than the distances found in a conventional knotter.

In an embodiment of the present invention the twine holder 86 may be modified to provide a twine guide 86a, for example by removing or modifying the retainer 120, so that the notches 87 in the periphery of the guide disk serve only to bring the twines into a correct position in relation to the bill hook 82 and the opened tongue/catching element 83a. An alternative twine holder 86b is then provided a short distance away from the bill hook 82 and the cutter 94 is repositioned so that it is located between the twine guide 86a and the twine holder 86b. The twine is held by the twine holder 86b, which is positioned further away from the bill hook 82 than the twine guide 86a and the twine is severed between the twine guide 86a and the twine holder 86b. As a result, the twine is severed beyond the position of a conventional disk/twine holder (seen from the bill hook) to provide an increased length L of twine between the bill hook 82 and the cut ends of the twines.

In this embodiment, the severing device or cutter 94 is optionally not mounted directly on the stripper arm 92 that strips the knot from the bill hook 82, but comprises a separate cutter mechanism located further from the bill hook. By comparison, in a conventional knotter the cutter 94 is fixedly connected to the stripper arm 92.

In another embodiment of the invention, the twine holder 86 is configured to release the twines just after the bill hook 82 has finished its second turn to complete the knot and before or at the moment the knot is pushed/pulled off the bill hook 82 by the stripper arm 92. This helps to prevent the possibility that there will be loose twine ends or "tails" (waste) that will pollute the fodder or the environment. By releasing the twines the loop of the second knot of the binding cycle will have longer ends.

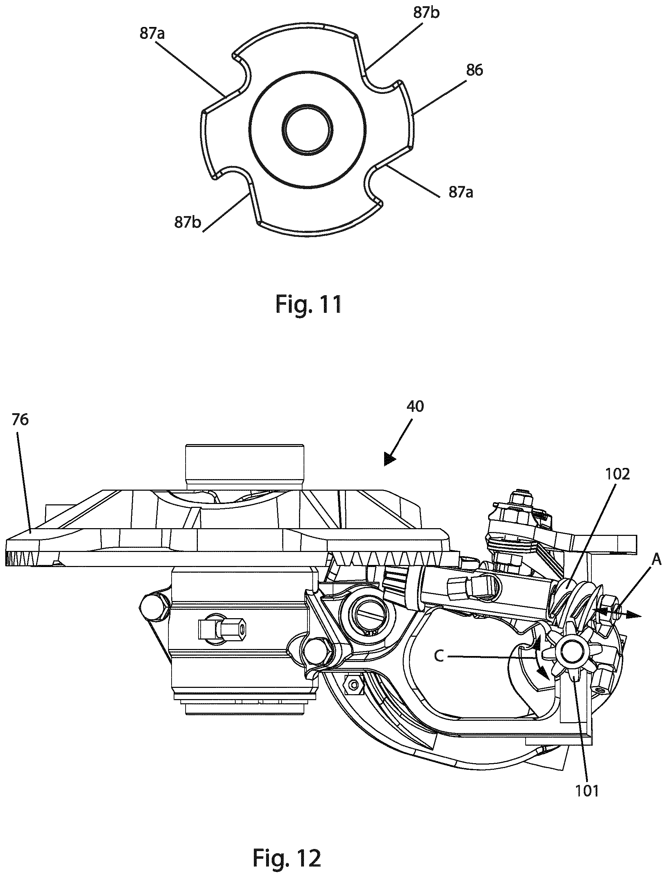

For example, in an embodiment of the invention, the releasing of the twine ends by the twine holder 86 is done by positioning the notches 87a, 87b in the twine holder disk 86 asymmetrically (not at 90 degrees), as illustrated in Fig. 11, so as to have the twines held for the first knot between the first notch 87a and the retainer 120 and to have the second notch 87b positioned (at rest) just beyond the clamping retainer 120. For example, the notches 87a, 87b may be displaced at angles of approximately 65-70 degrees and 110-115 degrees, as illustrated in Fig. 11.

In another embodiment, as illustrated in Figure 12, the releasing of the twine ends by the twine holder can also be done by moving the worm screw 102 axially along its turning axis at the end of the second turn, so as to give the holding disk 86 an extra forward rotary movement and to release the twine ends just before the second knot is pushed/pulled off the bill hook 82, so that the twine will not be cut during stripping off of the second knot. Axial movement of the worm screw 102 is shown in Figure 12 by a straight double-headed arrow A, and the resulting additional rotation of the worm gear 101, which drives rotation of the holding disk 86, is shown by a curved double-headed arrow C. Axial movement of the worm screw 102 may be driven by another component of the knotter, for example the stripper arm 92. After formation of the second knot the worm screw 102 will be positioned axially back to its original position, for example by a spring or other resilient component.

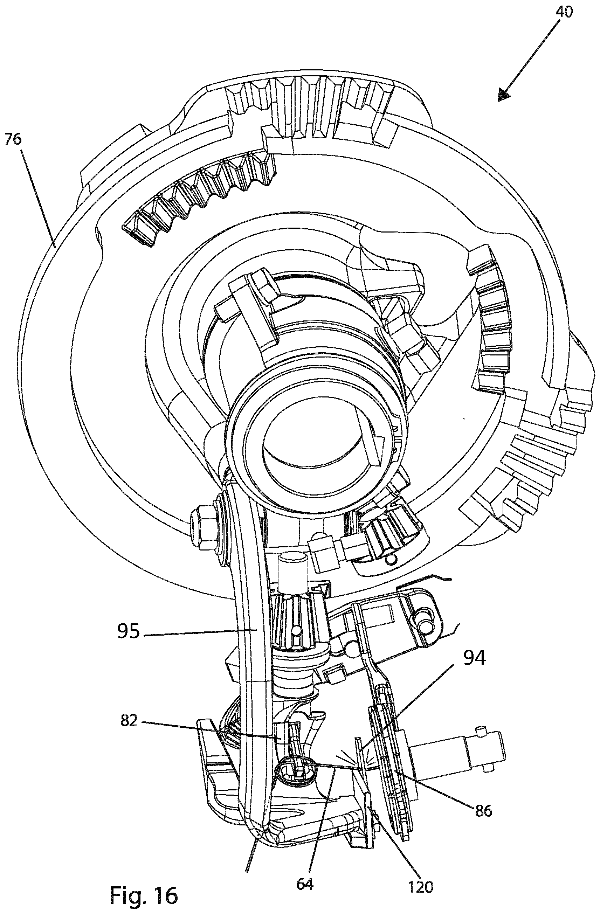

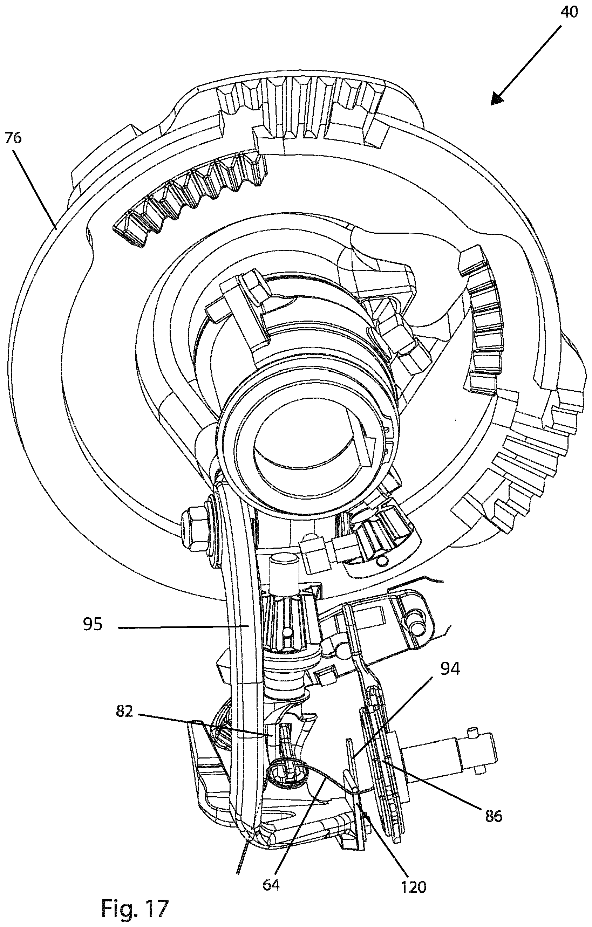

In another embodiment, as illustrated in Figures 16 & 17, the retainer 120 may be configured so that the twine 64 is guided across the retainer 120 in two different positions, depending on the rotational position of the guide disk 86. For example, as shown in Figure 16 in a first position of the guide disk 86 for tying the first knot the twine 64 is guided across the retainer 120 in a high position, where it can be contacted by the cutter 94. As a result, the twine 64 is cut when the cutter 94 is activated. Alternatively, as shown in Figure 17 in a second position of the guide disk 86 for tying the second knot the twine 64 is guided across the retainer 120 in a low position, where it cannot be contacted by the cutter 94. As a result, the twine 64 is not cut by the cutter 94, allowing it to be pulled through the guide disk 86. The retainer 120 does not have a cutting edge and does not cut the twine 64.

Numerous different embodiments or alternative features of the invention are described above.

## Claims

1. A baler comprising a bale forming channel (26), a reciprocating plunger (30) configured to compress bale material in the bale forming channel (26) to form a bale (B), and a binding system for binding a bale in the bale forming channel (26) with a pair of twines (64,66) that pass around opposite sides of the bale (B), the binding system comprising a knotter (40) that includes a rotary bill hook (82) that has a rotational axis (84), a twine holder (86) and a twine cutter (94), wherein the binding system is configured to tie a first knot (70) and a second knot (72) successively in the twines (64,66) during one full operating cycle of the binding system, wherein:
- the first and second knots (70,72) are tied successively by a single bill hook (82), and
- the first knot (70) and the second knot (72) are both loop knots,
wherein the twine cutter (94) is configured to cut the twine (64) to provide a cut end, and wherein the twine cutter (94) is displaced from the bill hook (82) to provide a length L of twine between the cut end and the rotational axis (84) of the bill hook, **characterised in that** the length L fulfils the following definition:
- L is at least 1.3 times the length of the bill hook (82) from the rotational axis (84) to the tip of the bill hook.

2. A baler according to claim 1, wherein the twine holder (86) comprises a rotary disk with a plurality of clamping notches (87), a retainer (120) adjacent a periphery of the rotary disk, and a drive (101,102) for rotating the rotary disk to clamp twines (64,66) in at least one of the clamping notches (87) against the retainer (120), and wherein the clamping notches (87) are arranged asymmetrically around the periphery of the rotary disk.

3. A baler according to claim 1, wherein the twine holder (86) comprises a rotary disk with a plurality of clamping notches (87), a retainer (120) adjacent a periphery of the rotary disk, and a drive (101,102) for rotating the rotary disk to clamp a twine (64,66) in at least one of the clamping notches (87) against the retainer (120), wherein the retainer (120) is configured so that the twine (64) can be guided across the retainer (120) in two different positions depending on the rotational position of the rotary disk, comprising a first position in which the twine (64,) can be cut by the twine cutter (94) and a second position in which the twine (64) cannot be cut by the twine cutter (94).

4. A baler according to claim 1, wherein the bill hook (82) is rotatable between a first position in which the bill hook (82) engages the twines (64,66) and a second position in which a knot formed by the knotter (40) is stripped from the bill hook (82) by the stripper element (92), wherein the bill hook (82) includes a catching element (96) that is configurable in a closed configuration to retain a twine to the bill hook (82) and in an open configuration to release the twine from the bill hook (82), wherein the catching element (96) is configured to adopt the open configuration to release a retained twine from the bill hook (82) after a knot (70,72) formed by the knotter (40) is removed from the bill hook (82) by the stripper element (92), so that the cut end of the twine is not pulled through the knot (70,72), and wherein the catching element (96) is biased by a resilient biasing element (108) towards the closed configuration and is moved to the open configuration by an opening element (97) that acts against the resilient biasing element (108), without rotating the bill hook (82) beyond the second position.

5. A baler according to claim 4, wherein the opening element (97) comprises a rotary drive element that drives movement of the catching element (96) between the closed configuration and the open configuration, wherein the rotary drive element is rotatable relative to the bill hook (82) while the bill hook (82) is in the second position; and wherein the rotary drive element comprises a cam surface (91) that engages a cam follower (85) of the catching element.

6. A baler according to claim 5, wherein the opening element (97) comprises a linear drive element that drives movement of the catching element (96) between the closed configuration and the open configuration while the bill hook (82) is in the second position.

7. A baler according to claim 6, wherein the catching element (96) is moved to the open configuration by reducing or removing a biasing force applied by the resilient biasing element (108), so that the catching element (96) opens in response to tension in the twine.

8. A baler according to any preceding claim, wherein the length L fulfils one or more of the following definitions:
- L is at least 1.6 times, or at least 2.0 times the length of the bill hook (82) from the rotational axis (84) to the tip of the bill hook;
- L is at least 0.5 times, or at least 0.6 times, or at least 0.75 times the length of twine needed to wrap circumferentially around the bill hook (82):
- L is at least 9 times, or at least 11 times, or at least 14 times the diameter of the twine when tied around a bound bale (B);
- L is at least 34mm, or at least 41mm, or about 52mm.

9. A method of binding a bale in a baler comprising a bale forming channel (26), a reciprocating plunger (30) that compresses bale material in the bale forming channel (26) to form a bale (B), and a binding system that binds a bale (B) in the bale forming channel (26) with a pair of twines (64,66) that pass around opposite sides of the bale (B), the binding system comprising a knotter (40) that includes a rotary bill hook (82) that has a rotational axis (84), a twine holder (86) and a twine cutter (94), wherein the binding method comprises tying a first knot (70) and a second knot (72) successively in the twines (64,66) during one full operating cycle of the binding system, wherein:
- the first and second knots (70,72) are tied successively by a single bill hook (82), and
- the first knot (70) and the second knot (72) are both tied as loop knots, and
further comprising displacing the twine cutter (94) from the bill hook (82) to provide a length L of twine between the cut end and the rotational axis (84) of the bill hook, **characterised in that** the length L fulfils the following definition:
- L is at least 1.3 times the length of the bill hook (82) from the rotational axis (84) to the tip of the bill hook.

10. A method according to claim 9, wherein the twine holder (86) comprises a rotary disk with a plurality of clamping notches (87) arranged asymmetrically around a periphery of the rotary disk, and a retainer (120) adjacent the periphery of the rotary disk, the method comprising driving rotation of the rotary disk to clamp twines (64,66) in at least one of the clamping notches (87) against the retainer (120).

11. A method according to claim 9, wherein the twine holder (86) comprises a rotary disk with a plurality of clamping notches (87), a retainer (120) adjacent a periphery of the rotary disk, and a drive (101,102) for rotating the rotary disk to clamp a twine in at least one of the clamping notches (87) against the retainer (120), the method comprising guiding the twine across the retainer (120) in two different positions by adjusting the rotational position of the rotary disk, said positions comprising a first position in which the twine can be cut by the twine cutter (94) and a second position in which the twine cannot be cut by the twine cutter (94).

12. A method according to claim 11, further comprising rotating the bill hook (82) between a first position in which the bill hook (82) engages the twines (62,64) and a second position in which a knot is stripped from the bill hook (82) by the stripper element (92), resiliently biasing the catching element (96) towards a closed configuration to retain a twine on the bill hook (82) while a knot is formed, and moving the catching element (96) to an open configuration by operation of an opening element (97) that acts against the resilient biasing element (108), without rotating the bill hook (82) beyond the second position, to release the retained twine after the knot has been removed from the bill hook (82), so that the cut end of the twine is not pulled through the knot

13. A method according to claim 12, further comprising driving movement of the catching element (96) between the closed configuration and the open configuration by rotating the opening element (97) relative to the bill hook (82) while the bill hook (82) is in the second position, said opening element (97) comprising a rotary drive element; and further comprising engaging a cam surface (91) of the rotary drive element with a cam follower (85) of the catching element (96).

14. A method according to claim 12, further comprising driving movement of the catching element (96) between the closed configuration and the open configuration by operating the opening element (97) comprising a linear drive element.

15. A method according to any one of claims 12 to 14, wherein the length L fulfils one or more of the following definitions:
- L is at least 1.6 times, or at least 2.0 times the length of the bill hook (82) from the rotational axis (84) to the tip of the bill hook;
- L is at least 0.5 times, or at least 0.6 times, or at least 0.75 times the length of twine needed to wrap circumferentially around the bill hook:
- L is at least 9 times, or at least 11 times, or at least 14 times the diameter of the twine when tied around a bound bale;
- L is at least 34mm, or at least 41mm, or about 52mm.

## Patentansprüche

1. Eine Ballenpresse, die einen Ballenbildungskanal (26), einen hin- und hergehenden Kolben (30), der so konfiguriert ist, dass er Ballenmaterial in dem Ballenbildungskanal (26) zum Bilden eines Ballens (B) komprimiert, und ein Bindesystem zum Binden eines Ballens in dem Ballenbildungskanal (26) mit einem Paar von Garnen (64, 66), die um entgegengesetzte Seiten des Ballens (B) verlaufen, beinhaltet, wobei das Bindesystem einen Knüpfapparat (40) beinhaltet, der einen drehbaren Schnabelhaken (82) mit einer Drehachse (84), einen Garnhalter (86) und einen Garnschneider (94) umfasst, wobei das Bindesystem so konfiguriert ist, dass es während eines vollständigen Betriebszyklus des Bindesystems nacheinander einen ersten Knoten (70) und einen zweiten Knoten (72) in den Garnen (64, 66) knüpft, wobei:
- der erste und der zweite Knoten (70, 72) nacheinander durch einen einzigen Schnabelhaken (82) geknüpft werden, und
- der erste Knoten (70) und der zweite Knoten (72) beide Schlingenknoten sind, wobei der Garnschneider (94) so konfiguriert ist, dass er das Garn (64) schneidet, um ein geschnittenes Ende bereitzustellen, und wobei der Garnschneider (94) von dem Schnabelhaken (82) versetzt ist, um eine Länge L von Garn zwischen dem geschnittenen Ende und der Drehachse (84) des Schnabelhakens bereitzustellen, **dadurch gekennzeichnet, dass** die Länge L die folgende Definition erfüllt:
- L beträgt mindestens das 1,3-Fache der Länge des Schnabelhakens (82) von der Drehachse (84) bis zu der Spitze des Schnabelhakens.

2. Ballenpresse gemäß Anspruch 1, wobei der Garnhalter (86) eine Drehscheibe mit einer Vielzahl von Klemmkerben (87), eine an einen Umfang der Drehscheibe angrenzende Halterung (120) und einen Antrieb (101, 102) zum Drehen der Drehscheibe beinhaltet, um Garne (64, 66) in mindestens einer der Klemmkerben (87) gegen die Halterung (120) zu klemmen, und wobei die Klemmkerben (87) asymmetrisch um den Umfang der Drehscheibe angeordnet sind.

3. Ballenpresse gemäß Anspruch 1, wobei der Garnhalter (86) eine Drehscheibe mit einer Vielzahl von Klemmkerben (87), eine an einen Umfang der Drehscheibe angrenzende Halterung (120) und einen Antrieb (101, 102) zum Drehen der Drehscheibe beinhaltet, um ein Garn (64, 66) in mindestens einer der Klemmkerben (87) gegen die Halterung (120) zu klemmen, wobei die Halterung (120) so konfiguriert ist, dass das Garn (64) in Abhängigkeit von der Drehposition der Drehscheibe in zwei verschiedenen Positionen über die Halterung (120) geführt werden kann, die eine erste Position, in der das Garn (64) von dem Garnschneider (94) geschnitten werden kann, und eine zweite Position, in der das Garn (64) nicht von dem Garnschneider (94) geschnitten werden kann, beinhalten.

4. Ballenpresse gemäß Anspruch 1, wobei der Schnabelhaken (82) zwischen einer ersten Position, in der der Schnabelhaken (82) mit den Garnen (64, 66) zusammenwirkt, und einer zweiten Position, in der ein von dem Knüpfapparat (40) gebildeter Knoten durch das Abstreifelement (92) von dem Schnabelhaken (82) abgestreift wird, drehbar ist, wobei der Schnabelhaken (82) ein Fangelement (96) umfasst, das in einer geschlossenen Konfiguration, um ein Garn an dem Schnabelhaken (82) zu halten, und in einer offenen Konfiguration, um das Garn von dem Schnabelhaken (82) freizugeben, konfigurierbar ist, wobei das Fangelement (96) so konfiguriert ist, dass es die offene Konfiguration annimmt, um ein gehaltenes Garn von dem Schnabelhaken (82) freizugeben, nachdem ein durch den Knüpfapparat (40) gebildeter Knoten (70, 72) durch das Abstreifelement (92) von dem Schnabelhaken (82) entfernt wurde, sodass das abgeschnittene Ende des Garns nicht durch den Knoten (70, 72) gezogen wird, und wobei das Fangelement (96) durch ein elastisches Vorspannelement (108) in Richtung der geschlossenen Konfiguration vorgespannt ist und durch ein Öffnungselement (97), das gegen das elastische Vorspannelement (108) wirkt, in die offene Konfiguration bewegt wird, ohne den Schnabelhaken (82) über die zweite Position hinaus zu drehen.

5. Ballenpresse gemäß Anspruch 4, wobei das Öffnungselement (97) ein Drehantriebselement beinhaltet, das die Bewegung des Fangelements (96) zwischen der geschlossenen Konfiguration und der offenen Konfiguration antreibt, wobei das Drehantriebselement relativ zu dem Schnabelhaken (82) drehbar ist, während sich der Schnabelhaken (82) in der zweiten Position befindet; und wobei das Drehantriebselement eine Nockenfläche (91) beinhaltet, die mit einem Nockenstößel (85) des Fangelements zusammenwirkt..

6. Ballenpresse gemäß Anspruch 5, wobei das Öffnungselement (97) ein lineares Antriebselement beinhaltet, das die Bewegung des Fangelements (96) zwischen der geschlossenen Konfiguration und der offenen Konfiguration antreibt, während sich der Schnabelhaken (82) in der zweiten Position befindet.

7. Ballenpresse gemäß Anspruch 6, wobei das Fangelement (96) in die offene Konfiguration bewegt wird, indem eine von dem elastischen Vorspannelement (108) ausgeübte Vorspannkraft reduziert oder aufgehoben wird, sodass sich das Fangelement (96) als Reaktion auf die Spannung des Garns öffnet.

8. Ballenpresse gemäß einem der vorhergehenden Ansprüche, wobei die Länge L eine oder mehrere der folgenden Definitionen erfüllt:
- L beträgt mindestens das 1,6-Fache oder mindestens das 2,0-Fache der Länge des Schnabelhakens (82) von der Drehachse (84) bis zu der Spitze des Schnabelhakens;
- L beträgt mindestens das 0,5-Fache oder mindestens das 0,6-Fache oder mindestens das 0,75-Fache der Länge des Garns, die benötigt wird, um den Schnabelhaken (82) in Umfangsrichtung zu umwickeln;
- L beträgt mindestens das 9-Fache oder mindestens das 11-Fache oder mindestens das 14-Fache des Durchmessers des Garns, wenn es um einen gebundenen Ballen (B) geknüpft ist;
- L beträgt mindestens 34 mm oder mindestens 41 mm oder etwa 52 mm.

9. Ein Verfahren zum Binden eines Ballens in einer Ballenpresse, die einen Ballenbildungskanal (26), einen hin- und hergehenden Kolben (30), der Ballenmaterial in dem Ballenbildungskanal (26) zum Bilden eines Ballens (B) komprimiert, und ein Bindesystem zum Binden eines Ballens in dem Ballenbildungskanal (26) mit einem Paar von Garnen (64, 66), die um entgegengesetzte Seiten des Ballens (B) verlaufen, beinhaltet, wobei das Bindesystem einen Knüpfapparat (40) beinhaltet, der einen drehbaren Schnabelhaken (82) mit einer Drehachse (84), einen Garnhalter (86) und einen Garnschneider (94) umfasst, wobei das Bindeverfahren das Knüpfen eines ersten Knotens (70) und eines zweiten Knotens (72) nacheinander in den Garnen (64, 66) während eines vollständigen Betriebszyklus des Bindesystems beinhaltet, wobei:
- der erste und der zweite Knoten (70, 72) nacheinander durch einen einzigen Schnabelhaken (82) geknüpft werden, und
- der erste Knoten (70) und der zweite Knoten (72) beide als Schlaufenknoten geknüpft werden, und
ferner beinhaltend das Versetzen des Garnschneiders (94) von dem Schnabelhaken (82), um eine Länge L von Garn zwischen dem geschnittenen Ende und der Drehachse (84) des Schnabelhakens bereitzustellen, **dadurch gekennzeichnet, dass** die Länge L die folgende Definition erfüllt:
- L beträgt mindestens das 1,3-Fache der Länge des Schnabelhakens (82) von der Drehachse (84) bis zu der Spitze des Schnabelhakens.

10. Verfahren gemäß Anspruch 9, wobei der Garnhalter (86) eine Drehscheibe mit einer Vielzahl von Klemmkerben (87), die asymmetrisch um einen Umfang der Drehscheibe angeordnet sind, und eine an den Umfang der Drehscheibe angrenzende Halterung (120) beinhaltet, wobei das Verfahren das Antreiben von Drehung der Drehscheibe beinhaltet, um Garne (64, 66) in mindestens einer der Klemmkerben (87) gegen die Halterung (120) zu klemmen.

11. Verfahren gemäß Anspruch 9, wobei der Garnhalter (86) eine Drehscheibe mit einer Vielzahl von Klemmkerben (87), eine an einen Umfang der Drehscheibe angrenzende Halterung (120) und einen Antrieb (101, 102) zum Drehen der Drehscheibe beinhaltet, um ein Garn in mindestens einer der Klemmkerben (87) gegen die Halterung (120) zu klemmen, wobei das Verfahren das Führen des Garns über die Halterung (120) in zwei verschiedenen Positionen durch Einstellen der Drehposition der Drehscheibe beinhaltet, wobei die Positionen eine erste Position, in der das Garn von dem Garnschneider (94) geschnitten werden kann, und eine zweite Position, in der das Garn nicht von dem Garnschneider (94) geschnitten werden kann, beinhalten.

12. Verfahren gemäß Anspruch 11, das ferner Folgendes beinhaltet: Drehen des Schnabelhakens (82) zwischen einer ersten Position, in der der Schnabelhaken (82) mit den Garnen (62, 64) zusammenwirkt, und einer zweiten Position, in der ein Knoten durch das Abstreifelement (92) von dem Schnabelhaken (82) abgestreift wird, elastisches Vorspannen des Fangelements (96) in Richtung einer geschlossenen Konfiguration, um ein Garn an dem Schnabelhaken (82) zu halten, während ein Knoten gebildet wird, und Bewegen des Fangelements (96) in eine offene Konfiguration durch Betätigung eines Öffnungselements (97), das gegen das elastische Vorspannelement (108) wirkt, ohne den Schnabelhaken (82) über die zweite Position hinaus zu drehen, um das gehaltene Garn freizugeben, nachdem der Knoten von dem Schnabelhaken (82) entfernt worden ist, sodass das abgeschnittene Ende des Garns nicht durch den Knoten gezogen wird.

13. Verfahren gemäß Anspruch 12, das ferner das Antreiben einer Bewegung des Fangelements (96) zwischen der geschlossenen Konfiguration und der offenen Konfiguration durch Drehen des Öffnungselements (97) relativ zu dem Schnabelhaken (82) beinhaltet, während sich der Schnabelhaken (82) in der zweiten Position befindet, wobei das Öffnungselement (97) ein Drehantriebselement beinhaltet; und das ferner das Zusammenwirken einer Nockenfläche (91) des Drehantriebselements in einen Nockenstößel (85) des Fangelements (96) beinhaltet.

14. Verfahren gemäß Anspruch 12, das ferner das Antreiben einer Bewegung des Fangelements (96) zwischen der geschlossenen Konfiguration und der offenen Konfiguration durch Betätigen des Öffnungselements (97) beinhaltet, das ein Linearantriebselement beinhaltet.

15. Verfahren gemäß einem der Ansprüche 12 bis 14, wobei die Länge L eine oder mehrere der folgenden Definitionen erfüllt:
- L beträgt mindestens das 1,6-Fache oder mindestens das 2,0-Fache der Länge des Schnabelhakens (82) von der Drehachse (84) bis zu der Spitze des Schnabelhakens;
- L beträgt mindestens das 0,5-Fache oder mindestens das 0,6-Fache oder mindestens das 0,75-Fache der Länge von Garn, die benötigt wird, um den Schnabelhaken in Umfangsrichtung zu umwickeln:
- L beträgt mindestens das 9-Fache oder mindestens das 11-Fache oder mindestens das 14-Fache des Durchmessers des Garns, wenn es um einen gebundenen Ballen geknüpft ist;
- L beträgt mindestens 34 mm oder mindestens 41 mm oder etwa 52 mm.

## Revendications

1. Une presse à balles comprenant un canal de formation de balle (26), un piston à mouvement alternatif (30) configuré pour comprimer du matériau pour balles dans le canal de formation de balle (26) afin de former une balle (B), et un système de liage pour lier une balle dans le canal de formation de balle (26) avec une paire de ficelles (64, 66) qui passent autour de côtés opposés de la balle (B), le système de liage comprenant un noueur (40) qui inclut un bec noueur rotatif (82) qui a un axe de rotation (84), un porte-ficelle (86) et un coupe-ficelle (94), où le système de liage est configuré pour nouer un premier nœud (70) et un deuxième nœud (72) successivement dans les ficelles (64, 66) durant un cycle de fonctionnement complet du système de liage, où :
- les premier et deuxième nœuds (70, 72) sont noués successivement par un seul bec noueur (82), et
- le premier nœud (70) et le deuxième nœud (72) sont tous deux des nœuds en boucle,
où le coupe-ficelle (94) est configuré pour couper la ficelle (64) afin de fournir une extrémité coupée, et où le coupe-ficelle (94) est éloigné du bec noueur (82) afin de fournir une longueur L de ficelle entre l'extrémité coupée et l'axe de rotation (84) du bec noueur, **caractérisée en ce que** la longueur L satisfait à la définition suivante :
- L fait au moins 1,3 fois la longueur du bec noueur (82) de l'axe de rotation (84) à la pointe du bec noueur.

2. Une presse à balles selon la revendication 1, où le porte-ficelle (86) comprend un disque rotatif avec une pluralité d'encoches de pinçage (87), un dispositif de retenue (120) adjacent à une périphérie du disque rotatif, et un entraînement (101, 102) pour faire tourner le disque rotatif afin de pincer des ficelles (64, 66) dans au moins l'une des encoches de pinçage (87) contre le dispositif de retenue (120), et où les encoches de pinçage (87) sont agencées de manière asymétrique autour de la périphérie du disque rotatif.

3. Une presse à balles selon la revendication 1, où le porte-ficelle (86) comprend un disque rotatif avec une pluralité d'encoches de pinçage (87), un dispositif de retenue (120) adjacent à une périphérie du disque rotatif, et un entraînement (101, 102) pour faire tourner le disque rotatif afin de pincer une ficelle (64, 66) dans au moins l'une des encoches de pinçage (87) contre le dispositif de retenue (120), où le dispositif de retenue (120) est configuré de sorte que la ficelle (64) peut être guidée d'un côté à l'autre du dispositif de retenue (120) dans deux positions différentes en fonction de la position de rotation du disque rotatif, comprenant une première position dans laquelle la ficelle (64) peut être coupée par le coupe-ficelle (94) et une deuxième position dans laquelle la ficelle (64) ne peut pas être coupée par le coupe-ficelle (94).

4. Une presse à balles selon la revendication 1, où le bec noueur (82) peut tourner entre une première position dans laquelle le bec noueur (82) se met en prise avec les ficelles (64, 66) et une deuxième position dans laquelle un nœud formé par le noueur (40) est enlevé du bec noueur (82) par l'élément d'enlèvement (92), où le bec noueur (82) inclut un élément d'accrochage (96) qui peut être configuré dans une configuration fermée pour retenir une ficelle sur le bec noueur (82) et dans une configuration ouverte pour libérer la ficelle du bec noueur (82), où l'élément d'accrochage (96) est configuré pour adopter la configuration ouverte afin de libérer une ficelle retenue du bec noueur (82) après qu'un nœud (70, 72) formé par le noueur (40) est retiré du bec noueur (82) par l'élément d'enlèvement (92), de sorte que l'extrémité coupée de la ficelle n'est pas tirée à travers le nœud (70, 72), et où l'élément d'accrochage (96) est sollicité par un élément de sollicitation élastique (108) vers la configuration fermée et est déplacé jusqu'à la configuration ouverte par un élément d'ouverture (97) qui agit contre l'élément de sollicitation élastique (108), sans faire tourner le bec noueur (82) au-delà de la deuxième position.

5. Une presse à balles selon la revendication 4, où l'élément d'ouverture (97) comprend un élément d'entraînement rotatif qui entraîne le déplacement de l'élément d'accrochage (96) entre la configuration fermée et la configuration ouverte, où l'élément d'entraînement rotatif peut tourner par rapport au bec noueur (82) pendant que le bec noueur (82) est dans la deuxième position ; et où l'élément d'entraînement rotatif comprend une surface de came (91) qui se met en prise avec un suiveur de came (85) de l'élément d'accrochage.

6. Une presse à balles selon la revendication 5, où l'élément d'ouverture (97) comprend un élément d'entraînement linéaire qui entraîne le déplacement de l'élément d'accrochage (96) entre la configuration fermée et la configuration ouverte pendant que le bec noueur (82) est dans la deuxième position.

7. Une presse à balles selon la revendication 6, où l'élément d'accrochage (96) est déplacé jusqu'à la configuration ouverte par réduction ou suppression d'une force de sollicitation appliquée par l'élément de sollicitation élastique (108), de sorte que l'élément d'accrochage (96) s'ouvre en réponse à une tension dans la ficelle.

8. Une presse à balles selon n'importe quelle revendication précédente, où la longueur L satisfait à une ou plusieurs des définitions suivantes :
- L fait au moins 1,6 fois, ou au moins 2,0 fois la longueur du bec noueur (82) de l'axe de rotation (84) à la pointe du bec noueur ;
- L fait au moins 0,5 fois, ou au moins 0,6 fois, ou au moins 0,75 fois la longueur de ficelle nécessaire pour s'enrouler de manière circonférentielle autour du bec noueur (82) ;
- L fait au moins 9 fois, ou au moins 11 fois, ou au moins 14 fois le diamètre de la ficelle lorsqu'elle est nouée autour d'une balle liée (B) ;
- L fait au moins 34 mm, ou au moins 41 mm, ou environ 52 mm.

9. Un procédé de liage d'une balle dans une presse à balles comprenant un canal de formation de balle (26), un piston à mouvement alternatif (30) qui comprime du matériau pour balles dans le canal de formation de balle (26) afin de former une balle (B), et un système de liage qui lie une balle (B) dans le canal de formation de balle (26) avec une paire de ficelles (64, 66) qui passent autour de côtés opposés de la balle (B), le système de liage comprenant un noueur (40) qui inclut un bec noueur rotatif (82) qui a un axe de rotation (84), un porte-ficelle (86) et un coupe-ficelle (94), le procédé de liage comprenant le fait de nouer un premier nœud (70) et un deuxième nœud (72) successivement dans les ficelles (64, 66) durant un cycle de fonctionnement complet du système de liage, où :
- les premier et deuxième nœuds (70, 72) sont noués successivement par un seul bec noueur (82), et
- le premier nœud (70) et le deuxième nœud (72) sont tous deux noués comme des nœuds en boucle, et
comprenant en outre le fait d'éloigner le coupe-ficelle (94) du bec noueur (82) afin de fournir une longueur L de ficelle entre l'extrémité coupée et l'axe de rotation (84) du bec noueur, **caractérisé en ce que** la longueur L satisfait à la définition suivante :
- L fait au moins 1,3 fois la longueur du bec noueur (82) de l'axe de rotation (84) à la pointe du bec noueur.

10. Un procédé selon la revendication 9, où le porte-ficelle (86) comprend un disque rotatif avec une pluralité d'encoches de pinçage (87) agencées de manière asymétrique autour d'une périphérie du disque rotatif, et un dispositif de retenue (120) adjacent à la périphérie du disque rotatif, le procédé comprenant le fait d'entraîner en rotation le disque rotatif afin de pincer des ficelles (64, 66) dans au moins l'une des encoches de pinçage (87) contre le dispositif de retenue (120).

11. Un procédé selon la revendication 9, où le porte-ficelle (86) comprend un disque rotatif avec une pluralité d'encoches de pinçage (87), un dispositif de retenue (120) adjacent à une périphérie du disque rotatif, et un entraînement (101, 102) pour faire tourner le disque rotatif afin de pincer une ficelle dans au moins l'une des encoches de pinçage (87) contre le dispositif de retenue (120), le procédé comprenant le fait de guider la ficelle d'un côté à l'autre du dispositif de retenue (120) dans deux positions différentes par ajustement de la position de rotation du disque rotatif, lesdites positions comprenant une première position dans laquelle la ficelle peut être coupée par le coupe-ficelle (94) et une deuxième position dans laquelle la ficelle ne peut pas être coupée par le coupe-ficelle (94).

12. Un procédé selon la revendication 11, comprenant en outre le fait de faire tourner le bec noueur (82) entre une première position dans laquelle le bec noueur (82) se met en prise avec les ficelles (62, 64) et une deuxième position dans laquelle un nœud est enlevé du bec noueur (82) par l'élément d'enlèvement (92), le fait de solliciter de manière élastique l'élément d'accrochage (96) vers une configuration fermée afin de retenir une ficelle sur le bec noueur (82) pendant qu'un nœud est formé, et le fait de déplacer l'élément d'accrochage (96) jusqu'à une configuration ouverte par l'actionnement d'un élément d'ouverture (97) qui agit contre l'élément de sollicitation élastique (108), sans faire tourner le bec noueur (82) au-delà de la deuxième position, afin de libérer la ficelle retenue après que le nœud a été retiré du bec noueur (82), de sorte que l'extrémité coupée de la ficelle n'est pas tirée à travers le nœud.

13. Un procédé selon la revendication 12, comprenant en outre le fait d'entraîner le déplacement de l'élément d'accrochage (96) entre la configuration fermée et la configuration ouverte par rotation de l'élément d'ouverture (97) par rapport au bec noueur (82) pendant que le bec noueur (82) est dans la deuxième position, ledit élément d'ouverture (97) comprenant un élément d'entraînement rotatif ; et comprenant en outre le fait de mettre en prise une surface de came (91) de l'élément d'entraînement rotatif avec un suiveur de came (85) de l'élément d'accrochage (96).

14. Un procédé selon la revendication 12, comprenant en outre le fait d'entraîner le déplacement de l'élément d'accrochage (96) entre la configuration fermée et la configuration ouverte par actionnement de l'élément d'ouverture (97) comprenant un élément d'entraînement linéaire.

15. Un procédé selon l'une quelconque des revendications 12 à 14, où la longueur L satisfait à une ou plusieurs des définitions suivantes :
- L fait au moins 1,6 fois, ou au moins 2,0 fois la longueur du bec noueur (82) de l'axe de rotation (84) à la pointe du bec noueur ;
- L fait au moins 0,5 fois, ou au moins 0,6 fois, ou au moins 0,75 fois la longueur de ficelle nécessaire pour s'enrouler de manière circonférentielle autour du bec noueur ;
- L fait au moins 9 fois, ou au moins 11 fois, ou au moins 14 fois le diamètre de la ficelle lorsqu'elle est nouée autour d'une balle liée ;
- L fait au moins 34 mm, ou au moins 41 mm, ou environ 52 mm.
